# EUROPEAN PATENT APPLICATION

(11) **EP 4 738 091 A1**
(43) Date of publication of application: **06.05.2026**
(21) Application number: 24831549.1
(22) Date of filing: 29.05.2024
(51) Int. Cl.: G06F 3/12, G06Q 50/10

(54) **SERVER DEVICE, PRINT DELIVERY SYSTEM, PRINT DELIVERY METHOD, AND PROGRAM**

(30) Priority: 30.06.2023 JP 2023108565
(71) Applicant: FUJIFILM Corporation, Tokyo 106-8620 (JP)
(72) Inventor: NAKAGAWA, Tomohiro, Saitama-shi, Saitama 331-9624 (JP); YAMAJI, Kei, Saitama-shi, Saitama 331-9624 (JP)
(74) Representative: Meissner Bolte Partnerschaft mbB
(86) International application number: PCT/JP2024/019679
(87) International publication number: WO 2025/004679

(57) **Abstract**

Provided are a server apparatus, a print distribution system, a print distribution method, and a program that can motivate a user to perform printing. A server apparatus (10) includes: a first processor; and a memory (14) that stores a first image that is an image for printing, in which the server apparatus (10) communicates with a user terminal (100) and distributes the first image, and the first processor (12) is configured to: transmit a second image that is an incomplete display form of the first image to the user terminal; receive a distribution request for the first image associated with the second image from the user terminal (100); and distribute the first image to the user terminal as the image for printing in a case where the distribution request is received.

## Description

### BACKGROUND OF THE INVENTION

### 1. Field of the Invention

The present invention relates to a server apparatus, a print distribution system, a print distribution method, and a program, and particularly relates to a server apparatus, a print distribution system, a print distribution method, and a program that distribute an image for printing to a terminal held by a user.

### 2. Description of the Related Art

In the related art, a service has been provided in which a user selects a desired image (photo), and a print (printed material) on which the image is printed is provided to the user. In this service, for example, the user can purchase a photo of an idol via the Internet and acquire a print of the purchased photo.

JP2017-16563A discloses a technology for printing a content image with a lottery execution number using a print service system.

### SUMMARY OF THE INVENTION

One embodiment according to the technology of the present disclosure provides a server apparatus, a print distribution system, a print distribution method, and a program that can motivate a user to perform printing.

A first aspect of the present invention relates to a server apparatus comprising: a first processor; and a memory that stores a first image that is an image for printing, in which the server apparatus communicates with a user terminal and distributes the first image, and the first processor is configured to: transmit a second image that is an incomplete display form of the first image to the user terminal; receive a distribution request for the first image associated with the second image from the user terminal; and distribute the first image to the user terminal as the image for printing in a case where the distribution request is received.

A second aspect relates to the server apparatus according to the first aspect, in which it is preferable that a region of a portion of the first image is hidden in the second image.

A third aspect relates to the server apparatus according to the first aspect, in which it is preferable that a portion of the first image is displayed in a blurred manner in the second image.

A fourth aspect relates to the server apparatus according to the first aspect, in which it is preferable that an entire first image is displayed in a blurred manner in the second image.

A fifth aspect relates to the server apparatus according to the first aspect, in which it is preferable that the first processor is configured to transmit information on content of the incomplete display form to the user terminal.

A sixth aspect relates to the server apparatus according to the fifth aspect, in which it is preferable that the first processor is configured to transmit information on a hidden image as the information to the user terminal.

A seventh aspect relates to the server apparatus according to the fifth aspect, in which it is preferable that the first processor is configured to transmit information on blurred display as the information to the user terminal.

An eighth aspect relates to the server apparatus according to the first aspect, in which it is preferable that the second image includes notification display indicating a region of the incomplete display form.

A ninth aspect relates to the server apparatus according to the first aspect, in which it is preferable that the first image is a composite image of a main subject and text, and the first processor is configured to analyze a position of the main subject and determine a position of the text.

A tenth aspect relates to the server apparatus according to the ninth aspect, in which it is preferable that the first processor is configured to: receive information on preferences of a user from the user terminal; and determine a position for disposing the text based on the information on the preferences.

An eleventh aspect relates to the server apparatus according to the first aspect, in which it is preferable that the first image is a composite image of a captured image and text, and the text indicates a message exchange between a user of the user terminal and a subject of the captured image.

A twelfth aspect of the present invention relates to a print distribution system consisting of: a server apparatus including a first processor and a memory that stores a first image that is an image for printing; and a user terminal including a second processor and a display unit and connected to a printer or provided with a printer, in which the first processor is configured to: transmit a second image that is an incomplete display form of the first image to the user terminal; receive a distribution request for the first image associated with the second image from the user terminal; and distribute the first image to the user terminal as the image for printing in a case where the distribution request is received, and the second processor is configured to: display the second image on the display unit; and receive the distributed first image and print the first image by the printer.

A thirteenth aspect of the present invention relates to the print distribution system, in which the second processor is configured to display the distributed first image on the display unit.

A fourteenth aspect of the present invention relates to a print distribution method using a server apparatus including a first processor and a memory that stores a first image that is an image for printing, the server apparatus communicating with a user terminal and distributing the first image, the print distribution method being executed by the first processor, the print distribution method comprising: a step of transmitting a second image that is an incomplete display form of the first image to the user terminal; a step of receiving a distribution request for the first image associated with the second image from the user terminal; and a step of distributing the first image to the user terminal as the image for printing in a case where the distribution request is received.

A fifteenth aspect of the present invention relates to a program for causing a server apparatus including a first processor and a memory that stores a first image that is an image for printing, the server apparatus communicating with a user terminal and distributing the first image, to execute a print distribution method, the program causing the first processor to execute: a step of transmitting a second image that is an incomplete display form of the first image to the user terminal; a step of receiving a distribution request for the first image associated with the second image from the user terminal; and a step of distributing the first image to the user terminal as the image for printing in a case where the distribution request is received.

### BRIEF DESCRIPTION OF THE DRAWINGS

FIG. 1 is a configuration diagram illustrating a print distribution system.
FIG. 2 is a block diagram illustrating functions executed by a processor of a print distribution server apparatus.
FIG. 3 is a diagram illustrating a hardware configuration example of a user terminal.
FIG. 4 is a functional block diagram illustrating functions executed by the processor of the user terminal.
FIG. 5 is a diagram illustrating a specific example of a sample image and a main image.
FIG. 6 is a diagram illustrating a specific example of the sample image and the main image.
FIG. 7 is a flowchart illustrating a print distribution method.
FIG. 8 is a block diagram illustrating functions executed by the processor.
FIG. 9 is a diagram illustrating a specific example of a second embodiment.
FIG. 10 is a schematic diagram illustrating a first specific example of the sample image.
FIG. 11 is a schematic diagram illustrating a second specific example of the sample image.
FIG. 12 is a schematic diagram illustrating a third specific example of the sample image.
FIG. 13 is a schematic diagram illustrating a first specific example of the main image with text.
FIG. 14 is a schematic diagram illustrating a second specific example of the main image with text.
FIG. 15 is a schematic diagram illustrating a third specific example of the main image with text.
FIG. 16 is a diagram illustrating an example of an initial screen of the user terminal.
FIG. 17 is a diagram illustrating another example of the initial screen of the user terminal.
FIG. 18 is a diagram illustrating still another example of the initial screen of the user terminal.
FIG. 19 is a diagram illustrating an example of a screen for displaying information on a celebrity.
FIG. 20 is a diagram illustrating a state where a time-limited photo is distributed.
FIG. 21 is a diagram illustrating a state where a user is encouraged to register for a premium membership.
FIG. 22 is a diagram illustrating a screen example during photo printing.
FIG. 23 is a diagram illustrating a screen example in a case where printing of the photo is completed.
FIG. 24 is a diagram illustrating a list of photos for which the user is encouraged to print by the celebrity followed by the user.
FIG. 25 is a diagram illustrating an example of a screen for notifying of the distribution of the time-limited photo.
FIG. 26 is a diagram illustrating an example of a screen for searching for and determining the celebrity followed by the user.
FIG. 27 is a diagram illustrating a screen example of a personal page of the user.
FIG. 28 is a diagram illustrating an example of a screen for managing the celebrity followed by the user.
FIG. 29 is a diagram illustrating an example of a screen for a manager of the celebrity to set an account.
FIG. 30 is a diagram illustrating an example of a screen for the celebrity to set the account.
FIG. 31 is a diagram illustrating another example of the screen for the celebrity to set the account.
FIG. 32 is a diagram illustrating an example of a screen for the celebrity to post the photo.
FIG. 33 is a diagram illustrating still another example of the screen for the celebrity to post the photo.
FIG. 34 is a diagram illustrating an example of a screen for registering the photo.
FIG. 35 is a diagram illustrating an example of a screen for setting information required for registering the photo.
FIG. 36 is a diagram illustrating an example of list display of photos pending approval.
FIG. 37 is a diagram illustrating an example of a screen for checking registration content of the photo.
FIG. 38 is a diagram illustrating still another example of the screen for checking the registration content of the photo.
FIG. 39 is a diagram illustrating an example of a screen for requesting correction of the registration content of the photo.
FIG. 40 is a diagram illustrating an example of a preview screen of the photo.

### DESCRIPTION OF THE PREFERRED EMBODIMENTS

Hereinafter, preferred embodiments of a server apparatus, a print distribution system, a print distribution method, and a program according to embodiments of the present invention will be described with reference to the accompanying drawings.

First, a service of distributing a print in the related art will be described.

In the related art, for example, a print of an idol photo in which an idol is captured as a main subject is sold. One example of conducting print sales is an idol photography session. Fans of the idol participate in the photography session by paying a fee, and acquire a print by photographing the idol. In addition, another example of conducting print sales is a case where a print obtained by already photographing the idol is sold online.

Here, in a case where the print is sold online, the print can be sold to a large number of unspecified users, but the enthusiasm of fans that would be felt at an actual photography session is diminished. Therefore, in a case where the print is sold online, the number of sales may be relatively low.

On the other hand, in the idol photography session, the user can pay money to photograph the idol with an instant camera and acquire a print, and can further have the idol write a message on the print. It is considered that the fans are happy by having the message written, and the number of prints sold increases.

Therefore, in the following description, even in a case where the print is sold via a network such as the Internet, a portion that can be recognized for the first time after purchase is provided. As a result, a technology is disclosed that can give the fans (users) the same enthusiasm as participating in the photography session and can motivate the users to purchase the print.

### [Print Distribution System]

The print distribution system according to one embodiment of the present invention will be described.

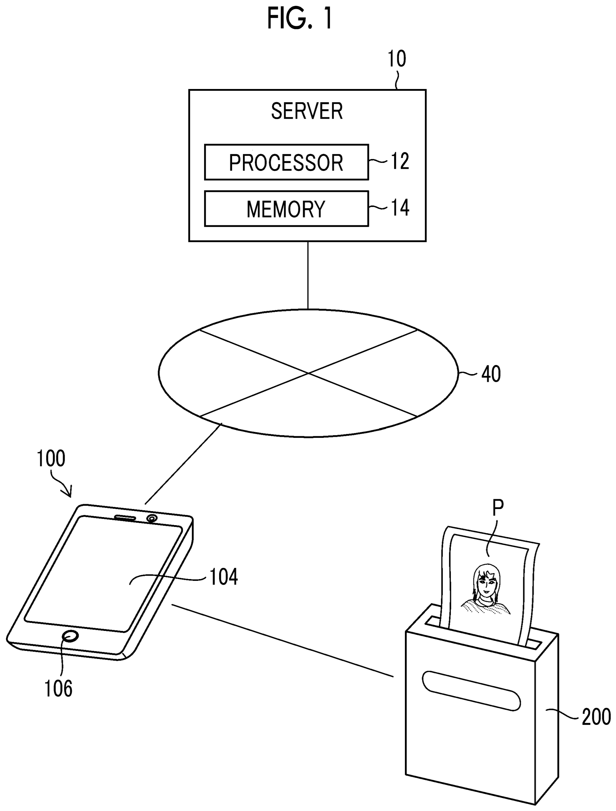

FIG. 1 is a configuration diagram illustrating the print distribution system. The print distribution server apparatus 10 is used, for example, in a case where a print on which a desired image is printed is sold to a user who owns a user terminal 100.

A print distribution system 1 illustrated in FIG. 1 includes a print distribution server apparatus (server apparatus) 10 and the user terminal 100 that communicates with the print distribution server apparatus 10 via a network 40. The user terminal 100 is also connected to a printer 200 wirelessly or via a wired connection.

The user terminal 100 transmits a print instruction to the printer 200. As a result, the user terminal 100 can output (print) a print P of the image stored in the user terminal 100 to the printer 200. The print P is printed with an image for printing received from the user terminal 100. The print P is printed on, for example, an instant film. In FIG. 1, an example has been described in which the user terminal 100 and the printer 200 are provided separately, but the application of the present invention is not limited to this. For example, the present invention can also be applied to an apparatus in which the user terminal 100 and the printer 200 are integrated.

The print distribution server apparatus 10 is configured by a computer, a workstation, or the like, and includes a processor (first processor) 12, a memory 14, an input/output interface, and the like.

The processor 12 is configured by a central processing unit (CPU) or the like, and is a unit that integrally controls the units of the print distribution server apparatus 10 and performs image processing of generating a sample image (second image) that is an incomplete display form of a main image (first image). Here, the incomplete display form means a form in which the main image is intentionally displayed in a blurred manner or a region of the main image is intentionally hidden, so that the main image itself is not displayed.

The memory 14 includes a flash memory, a read-only memory (ROM), a random-access memory (RAM), a hard disk device, and the like. The flash memory, the ROM, or the hard disk device is a non-volatile memory that stores various programs and the like including an operating system and an image processing program for executing an image processing method according to the embodiment of the present invention.

The RAM functions as a work area for processing performed by the processor 12. The RAM also temporarily stores various programs stored in the flash memory or the like, data used for arithmetic processing, and the like. A portion (RAM) of the memory 14 may be provided in the processor 12.

In addition, the memory 14 stores the main image that is the image for printing. The image for printing is captured by an image seller, and the captured image is sent to the print distribution server apparatus 10 and stored in the memory 14. For example, the image seller captures an image of an idol, and the captured image is stored in the memory 14 of the print distribution server apparatus 10 via the network 40. The main image may be provided with text or a stamp indicating a message from the idol. The main image may be stored in the memory 14 in a state where the text or the stamp is provided in advance. In addition, the text or the stamp may be combined with the main image by an image processing unit (not illustrated) of the print distribution server apparatus 10.

The print distribution server apparatus 10 is connected to the network 40 such as the Internet, and exchanges data with the user terminal 100 via the network 40.

Examples of the user terminal 100 include a smartphone, a laptop computer, a tablet terminal, and the like owned by the user. The user terminal 100 transmits a request to view the sample image to the print distribution server apparatus 10. In addition, the user terminal 100 receives the sample image and displays the received sample image on a display unit 104. Further, the user terminal 100 transmits a purchase request to the print distribution server apparatus 10 based on the sample image. Furthermore, the user terminal 100 acquires the main image from the print distribution server apparatus 10, and transmits a print request (print instruction) to the printer 200.

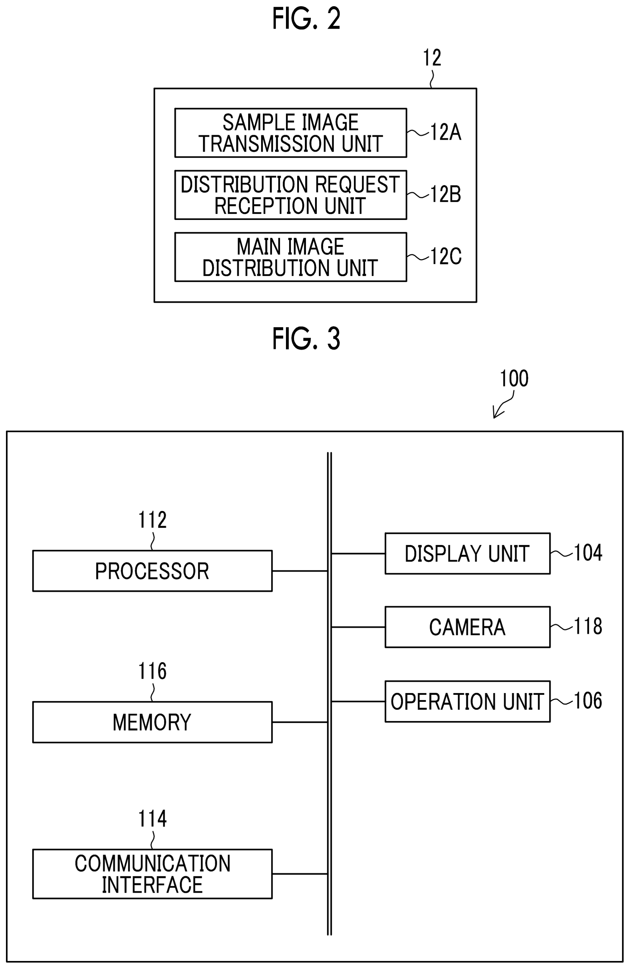

FIG. 2 is a block diagram illustrating functions executed by the processor (first processor) 12 of the print distribution server apparatus 10. The processor 12 executes each function by executing a dedicated program stored in the memory 14.

The processor 12 executes functions of a sample image transmission unit 12A, a distribution request reception unit 12B, and a main image distribution unit 12C.

The sample image transmission unit 12A transmits the sample image to the user terminal 100. Here, the sample image is an image that is the incomplete display form of the main image. For example, a region of a portion of the main image is hidden in the sample image, and thus the sample image is the incomplete display form. In addition, for example, a portion of the main image is displayed in a blurred manner in the sample image, and thus the sample image is the incomplete display form. In addition, for example, the entire main image is displayed in a blurred manner in the sample image, and thus the sample image is the incomplete display form. The sample image is transmitted to the user terminal 100, and the user displays the sample image on the display unit 104 of the user terminal 100. As a result, the user cannot view the main image itself, but can imagine the main image by the sample image.

The distribution request reception unit 12B receives a distribution request for the main image associated with the sample image from the user terminal 100. For example, the user views the sample image on the user terminal 100, and in a case where the user decides to purchase, the user transmits the distribution request from the user terminal 100 to the distribution request reception unit 12B of the print distribution server apparatus 10.

In a case where the distribution request is received, the main image distribution unit 12C distributes the main image to the user terminal 100 as the image for printing.

FIG. 3 is a diagram illustrating a hardware configuration example of the user terminal 100. The configuration illustrated in FIG. 3 mainly illustrates a part required for the description of the present invention, and a call function and the like are not illustrated or described.

The user terminal 100 includes a processor (second processor) 112, a memory 116, a communication interface 114, the display unit 104, a camera 118, and an operation unit 106.

The user terminal 100 includes the display unit 104. The display unit 104 displays the sample image received by the user terminal 100. Further, the display unit 104 can display the main image on the display unit 104 after the user decides to purchase. Furthermore, in a case where a video or a still image is captured by the camera 118, a live view image is displayed on the display unit 104.

The operation unit 106 is configured by a touch screen provided in the display unit 104 or a button that is a part of the operation unit 106. The selection of the sample image displayed on the display unit 104 can be input by operating the operation unit 106. For example, by the selection of the sample image, the purchase of the main image corresponding to the sample image is decided.

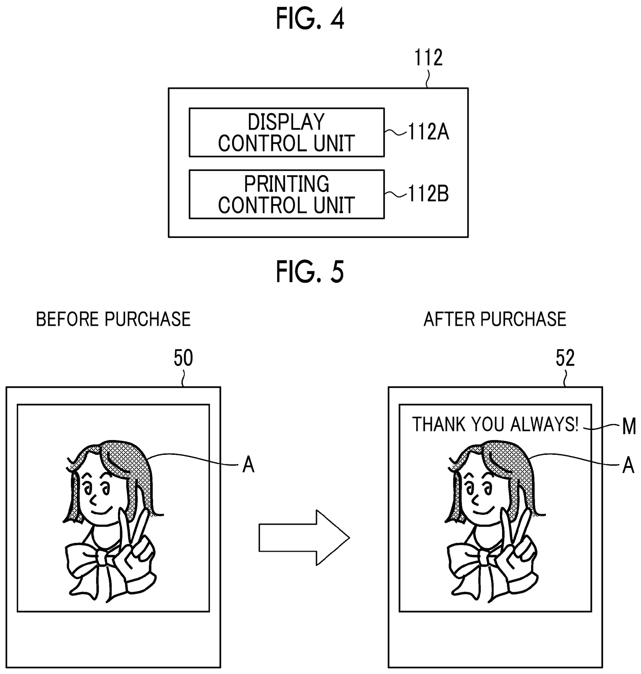

FIG. 4 is a functional block diagram illustrating functions executed by the processor 112 of the user terminal 100. The processor 112 executes each function by executing a dedicated program stored in the memory 116.

The processor 112 executes a display control unit 112A and a printing control unit 112B.

The display control unit 112A displays the sample image received from the print distribution server apparatus 10 on the display unit 104. The display control unit 112A can also display the main image on the display unit 104 after the main image is purchased. A limit may be placed on the number of times the main image can be displayed on the display unit 104.

The printing control unit 112B outputs the print instruction for the main image to the printer 200. Specifically, the printing control unit 112B transmits the print instruction for the main image acquired from the print distribution server apparatus 10 to the printer 200. Together with the print instruction, data for printing the main image is also transmitted to the printer 200. A limit may be placed on the number of times the main image can be printed.

### [Sample Image and Main Image]

Hereinafter, specific examples of the sample image and the main image will be described.

FIG. 5 is a diagram illustrating a specific example 1 of the sample image and the main image.

FIG. 5 illustrates a sample image 50 and a main image 52. Prior to the purchase of the main image, the sample image 50 is displayed on the display unit 104 of the user terminal 100. In the sample image 50, an idol A is shown, but text M is hidden. In a case where the purchase of the main image 52 is decided, the print of the main image 52 with text M can be acquired. Specifically, in the print of the main image 52, in addition to the idol A, the text M ("Thank you always!") handwritten by the idol A is added. As described above, in the sample image 50, the handwritten text M is hidden in the main image 52, and the sample image 50 is in an incomplete display form with respect to the main image, but in a case where the purchase of the main image 52 is decided, the print with text M can be acquired. As a result, the user can see the text M of the idol A for the first time after purchasing the print, so that the user can be further motivated to purchase the print.

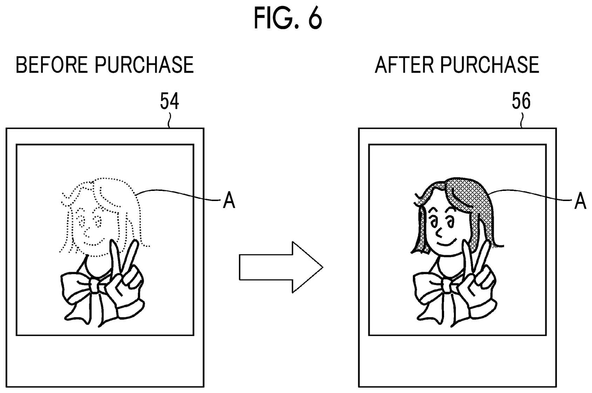

FIG. 6 is a diagram illustrating a specific example 2 of the sample image and the main image.

FIG. 6 illustrates a sample image 54 and a main image 56. Prior to the purchase of the main image, the sample image 54 is displayed on the display unit 104 of the user terminal 100. In the sample image 54, the idol A in which only a face portion of the idol A is blurred is shown. In the following description, blurred display and low-resolution display are indicated by a dotted line. On the other hand, in the main image 56, the entire idol A is clearly shown, and the face portion that is blurred in the sample image 54 is also clearly shown. As described above, in the sample image 54, the face portion is blurred with respect to the main image 56, and the sample image 54 is in the incomplete display form with respect to the main image, but in a case where the purchase of the main image 56 is decided, the print of the main image 56 in which the entire image is clearly shown can be acquired. As a result, the user can see the idol A in which the entire image is clearly illustrated for the first time after purchasing the print, so that the user can be motivated to purchase the print.

### [Print Distribution Method]

Next, a print distribution method using the print distribution system 1 and a program for achieving the print distribution method will be described.

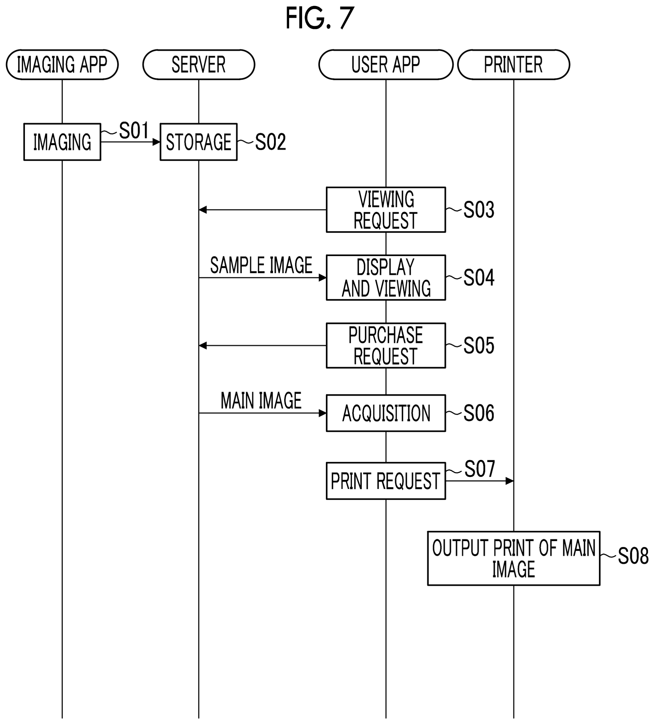

FIG. 7 is a flowchart illustrating the print distribution method. In FIG. 7, operations of a terminal (photographer terminal) (not illustrated) of a person who captures the main image on which an imaging application (referred to as an imaging app in FIG. 7) is installed, the print distribution server apparatus 10, the user terminal 100 on which a user application (referred to as a user app in FIG. 7) is installed, and the printer 200 connected to the user terminal 100 will be described.

First, the main image is captured by the photographer terminal. Then, the main image is transmitted to the print distribution server apparatus 10 via the network 40 (step S01). The resolution of the image in a case of being captured by the photographer terminal may be different from the resolution of the image transmitted to the print distribution server apparatus 10. For example, even in a case where a high-resolution image is acquired in a case of being captured by the photographer terminal, an image in which the resolution is lowered is transmitted in a case of being transmitted to the print distribution server apparatus 10. This makes it possible to match the resolution of the main image transmitted to the print distribution server apparatus 10 with the resolution of the print finally output by the printer 200. The print distribution server apparatus 10 receives the main image and stores the received main image in the memory 14 (step S02).

The user transmits the request to view the sample image to the print distribution server apparatus 10 via the network 40 using the user terminal 100 (step S03). The print distribution server apparatus 10 that has received the view request from the user terminal 100 transmits the sample image to the user terminal 100. The user terminal 100 displays the received sample image on the display unit 104, and the user views the displayed sample image (step S04).

Then, the user transmits the purchase request to the print distribution server apparatus 10 based on the viewed sample image (step S05). Then, the print distribution server apparatus 10 transmits the main image to the user terminal 100 (step S06). Then, the user terminal 100 transmits the print request for the acquired main image to the printer 200 (step S07). Then, the printer 200 outputs the print of the main image in response to the print request acquired from the user terminal 100 (step S08).

As described above, according to the present embodiment, the sample image is the incomplete display form of the main image, and the main image can be checked for the first time after the purchase is decided. As a result, the user can be motivated to purchase the print.

### <Second Embodiment>

Hereinafter, a second embodiment of the present invention will be described. In the second embodiment of the present invention, the print distribution server apparatus 10 transmits information on the content of the incomplete display form to the user terminal 100. As a result, even before the purchase, the user can make a decision to purchase after predicting the main image.

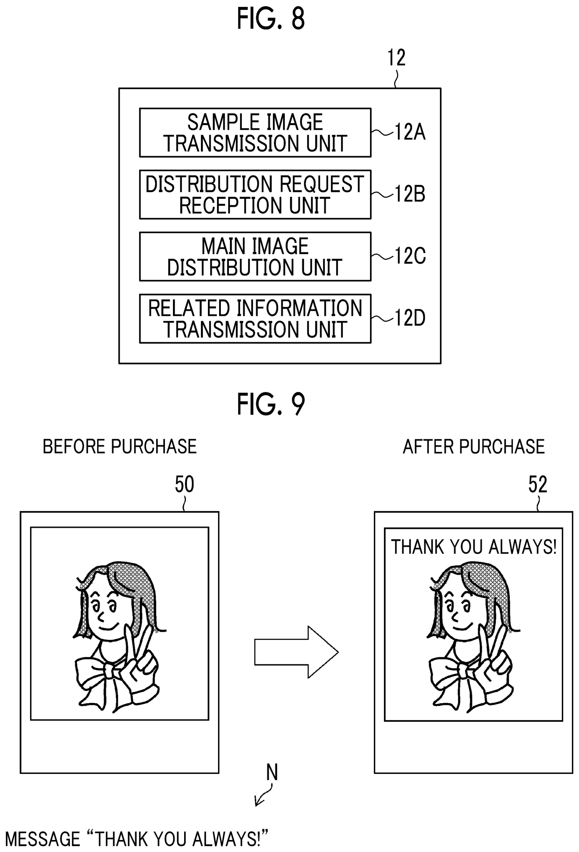

FIG. 8 is a block diagram illustrating functions executed by the processor 12. The same reference numerals are assigned to the functional block diagram described above, and redundant description thereof will be omitted.

A related information transmission unit 12D transmits the information on the content of the incomplete display form in the sample image to the user terminal 100. Specifically, the print distribution server apparatus 10 transmits information on a hidden image or information on blurred display to the user terminal 100. For example, in a case where text is hidden, the text content (message content) is transmitted to the user terminal 100. In addition, for example, in a case where the face of the idol is displayed in a blurred manner, a name of the idol is transmitted to the user terminal 100. In this way, by transmitting the information on the content of the incomplete display form in the sample image, the user can predict the main image even before the purchase.

FIG. 9 is a diagram illustrating a specific example of the present embodiment.

In a case illustrated in FIG. 9, the text M ("Thank you always!") of the main image 52 is hidden in the sample image 50. In this case, the related information transmission unit 12D transmits information N on the hidden text M to the user terminal 100. For example, the related information transmission unit 12D transmits the content of the handwritten text M as text data to the user terminal 100. As a result, the user can make a decision to purchase by checking what text of the message is added to the main image 52 even before the purchase.

### <Sample Image>

Hereinafter, specific examples of the display form of the sample image will be described.

As the sample image according to the embodiment of the present invention, various display forms can be adopted as long as the display form is the incomplete display form with respect to the main image. Specific examples of the display form of the sample image will be described below. The display form of the sample image is not limited to the following specific examples.

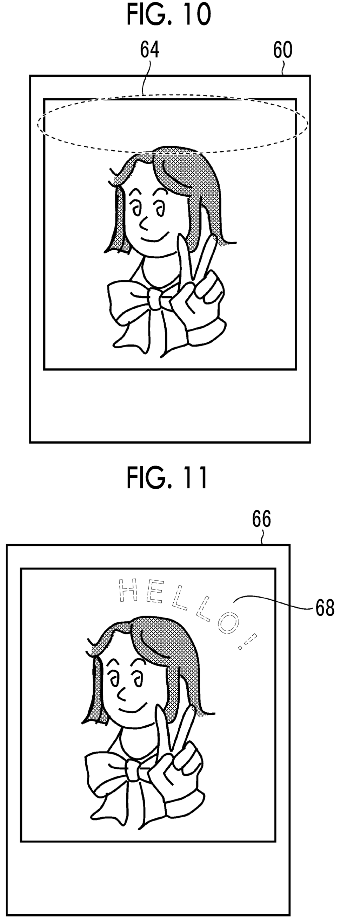

FIG. 10 is a schematic diagram illustrating a first specific example of the sample image.

A sample image 60 includes notification display 64 indicating a region of the incomplete display form. A message is added to the region of the notification display 64 of a main image corresponding to the sample image 60. By displaying the sample image 60 on the display unit 104 of the user terminal 100, the user can decide to purchase the print after checking the notification display 64 and predicting the portion to which the message is added.

FIG. 11 is a schematic diagram illustrating a second specific example of the sample image.

In a sample image 66, the text M is not completely hidden, but the text M is displayed at a low resolution. That is, the sample image 66 is in the incomplete display form by setting the text M to a low resolution. The sample image 66 includes low-resolution display 68 of the text M, and thus the user can understand how the main image would look when the message is attached.

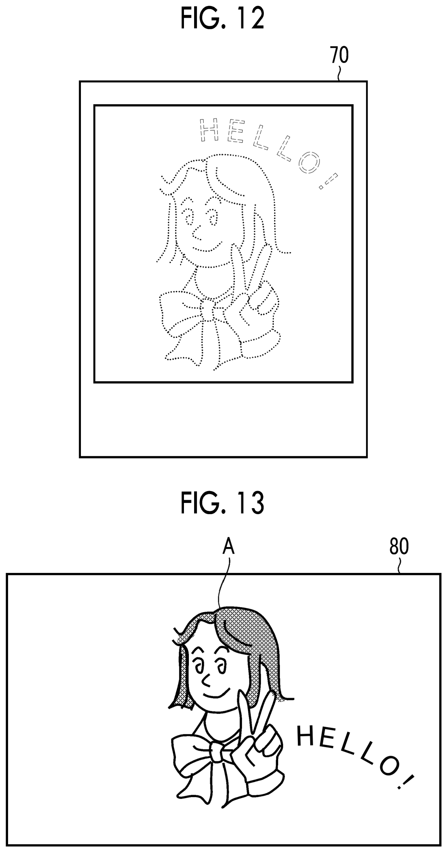

FIG. 12 is a schematic diagram illustrating a third specific example of the sample image.

In a sample image 70, the entire image has a low resolution. That is, the sample image 70 is in the incomplete display form by reducing the entire image to a low resolution with respect to the main image. As a result, by displaying the sample image 70 on the display unit of the user terminal 100, the user can understand how the main image would look.

### <Main image>

Hereinafter, specific examples of the main image will be described.

The main image according to the embodiment of the present invention shows a main subject composed of a person (for example, an idol) and handwritten text, a stamp, or the like. A position of the text or the stamp in the main image may be determined in advance, or may be determined by image processing as described below.

FIG. 13 is a schematic diagram illustrating a first specific example of the main image with text.

In a main image 80 illustrated in FIG. 13, a position for disposing the text M is controlled such that the text M does not overlap the face portion or the entire body of the idol A. For example, the image processing unit (not illustrated) executed by the processor 12 of the print distribution server apparatus 10 analyzes the image in which the idol A is shown, and disposes the text M at a position that does not overlap the idol A. As a result, the main image 80 in which the text M is disposed at an appropriate position can be generated. A composite image of the main image is generated by an image generation unit executed by the processor 12.

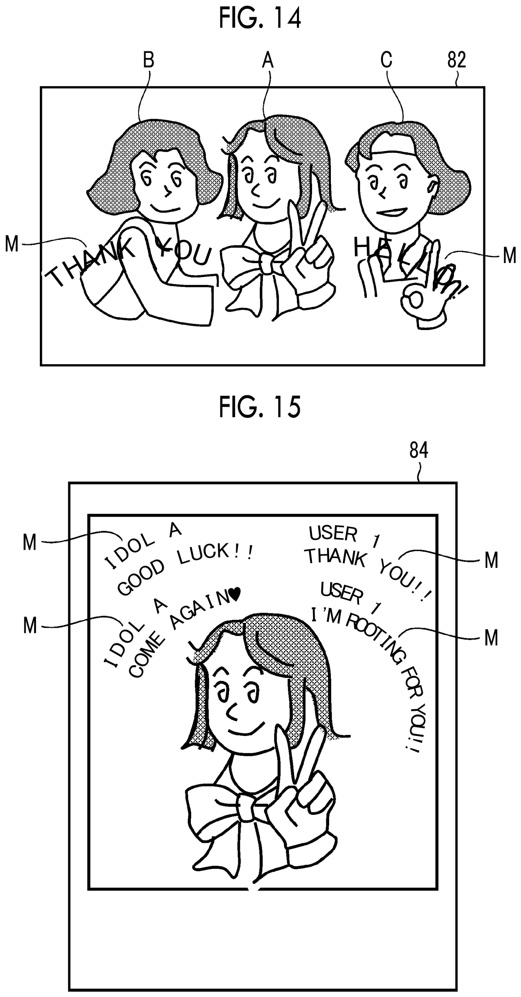

FIG. 14 is a schematic diagram illustrating a second specific example of the main image with text.

In a main image 82 illustrated in FIG. 14, an idol group composed of idols A, B, and C is the main subject. The image processing unit (not illustrated) executed by the processor 12 of the print distribution server apparatus 10 analyzes the idol group that is the main subject of the main image 82. Here, for example, in a case where the user having the user terminal 100 particularly supports the idol A, the text M is disposed such that the text M does not overlap the idol A. As a result, the main image 82 in which the message is appropriately disposed in accordance with preferences of the user can be generated. The information (information on the preferences of the user) indicating that the user particularly supports the idol A is transmitted from the user terminal 100 to the print distribution server apparatus 10.

FIG. 15 is a schematic diagram illustrating a third specific example of the main image with text.

A main image 84 illustrated in FIG. 15 includes the text M indicating a message exchange between the idol A that is the main subject and the user. The print of the main image 84 is a unique print in the world, which has the message exchange between the user and the idol A. A sample image of the main image 84 may be an image in which the text M is hidden by performing the image processing.

In the above-described embodiment, a hardware structure of the processing units (sample image transmission unit 12A, distribution request reception unit 12B, main image distribution unit 12C, related information transmission unit 12D, display control unit 112A, printing control unit 112B) that executes various types of processing is various processors as described below. The various processors include a central processing unit (CPU), which is a general-purpose processor that executes software (program) and functions as the various processing units, a programmable logic device (PLD), which is a processor whose circuit configuration can be changed after manufacture, such as a field programmable gate array (FPGA), and a dedicated electric circuit, which is a processor whose circuit configuration is designed for exclusive use in order to execute specific processing, such as an application specific integrated circuit (ASIC).

One processing unit may be configured by one of these various processors, or may be configured by two or more processors of the same type or different types (for example, a plurality of FPGAs, or a combination of CPU and FPGA). A plurality of processing units may be configured by one processor. A first example of the configuration of the plurality of processing units by one processor is a form in which one processor is configured by combining one or more CPUs and software, and this processor functions as the plurality of processing units, as represented by a computer, such as a client or a server. A second example thereof is a form in which a processor, which achieves the functions of the entire system including the plurality of processing units with one integrated circuit (IC) chip, is used, as represented by a system on chip (SoC) or the like. Various processing units are configured by one or more of the various processors as the hardware structure, as described above.

Further, the hardware structure of these various processors is, more specifically, an electric circuit (circuitry) in which the circuit elements, such as semiconductor elements, are combined.

Each of the above-described configurations and functions can be executed as appropriate by any hardware, software, or a combination thereof. For example, the present invention is applicable to a program for causing a computer to execute the above-described processing steps (processing procedures), a computer-readable recording medium (non-transitory recording medium) on which such a program is recorded, or a computer in which such a program can be installed.

### [Screen Example]

Hereinafter, screen examples of the photographer terminal and the user terminal 100 will be described. In the following examples, a full name of the celebrity or the like (including the idol), a group name, and a full name of the user may be described, but all of these are fictitious. In addition, in the practice of the present invention, the numerical values of fees and points may be different from the values in the following screen examples. In the drawing, a comment of the celebrity or the like is displayed as text in a portion described as "XXX ...".

### [Initial Screen of User Terminal]

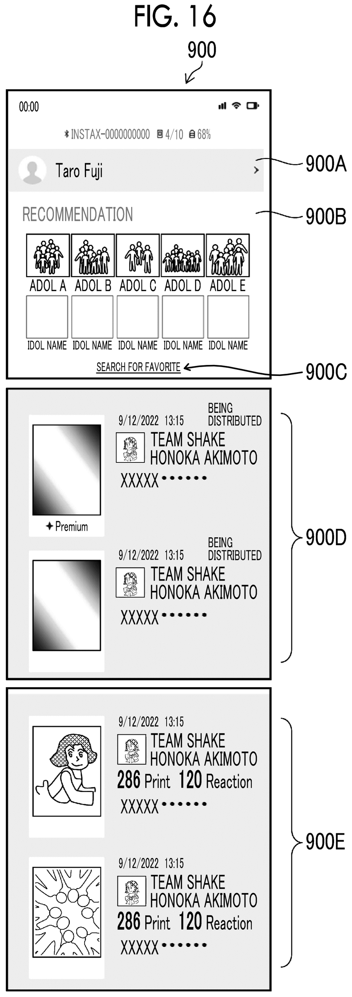

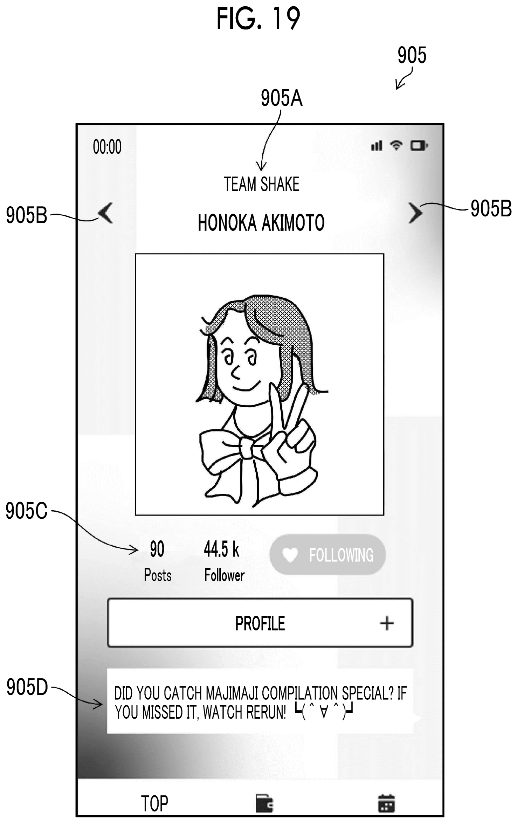

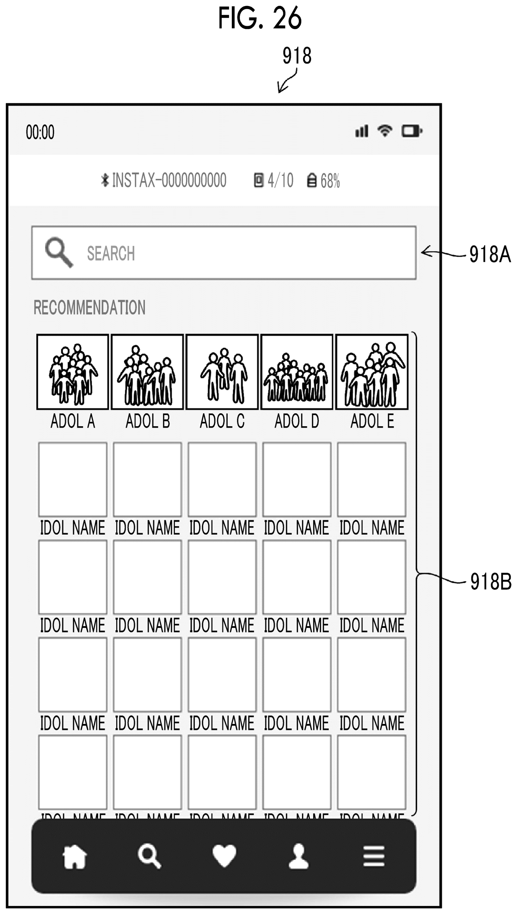

FIG. 16 is a diagram illustrating an example of an initial screen of the user terminal 100 (image reception-side device, terminal device). In a screen 900, a region 900A is a region in which a full name of the user or a display name such as a nickname is displayed. In a case where a celebrity followed by the user or a celebrity particularly supported by the user ("favorite", "favorite person", or "favorite member" described above) is not registered, a representative image of the celebrity recommended by the system is displayed in the region 900B, and in a case where the user taps the representative image, the screen of the user terminal 100 transitions to the screen of each celebrity (for example, see FIG. 19). The user terminal 100 can display a plurality (for example, 10) representative images, and can display the representative images in descending order of the number of followers. In addition, in a case where the celebrity followed by the user is not registered, in a case where the user taps a label 900C displayed as "search for a favorite", the screen of the user terminal 100 transitions to a state where the user can search for the celebrity (for example, see FIG. 26).

A photo being distributed (photo that has not been purchased and printed) is displayed in a region 900D. A photo purchased and printed by the user is displayed in a region 900E. The number of users who have purchased and printed each photo and the number of users who have reacted to the photo (posting a comment on the photo, selecting an icon indicating the feeling of the user, or the like) are displayed for each photo.

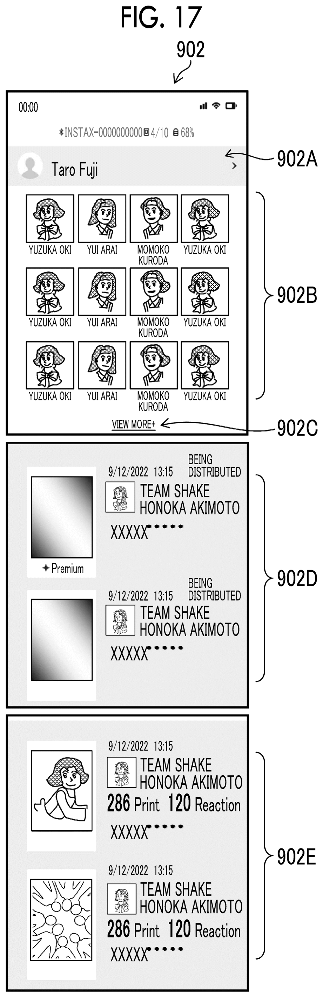

FIG. 17 is a diagram illustrating an example of an initial screen in a state where the celebrity to be followed by the user is registered. In a screen 902 illustrated in FIG. 17, as in the example of FIG. 16, a region 902A is displayed in which the full name of the user or the display name such as the nickname is displayed. In addition, the representative image of the celebrity followed by the user is displayed in a region 902B, and in a case where the user taps the representative image, the screen transitions to the screen of each celebrity (for example, see FIG. 19). It is preferable that, in a case where the update (the start of distribution of a new photo, a notification of an event, or the like) is performed since the previous viewing, the user terminal 100 displays the representative image of the celebrity with an identifying indication (by adding a mark or the like).

Even in a case where the celebrity followed by the user is registered, in a case where the user taps a label 902C displayed as "add a favorite", the screen transitions to a state where the user can search for the celebrity (for example, see FIG. 26).

As described above for the regions 900D and 900E, the photo being distributed and the photo that has been purchased and printed are displayed in regions 902D and 902E, respectively.

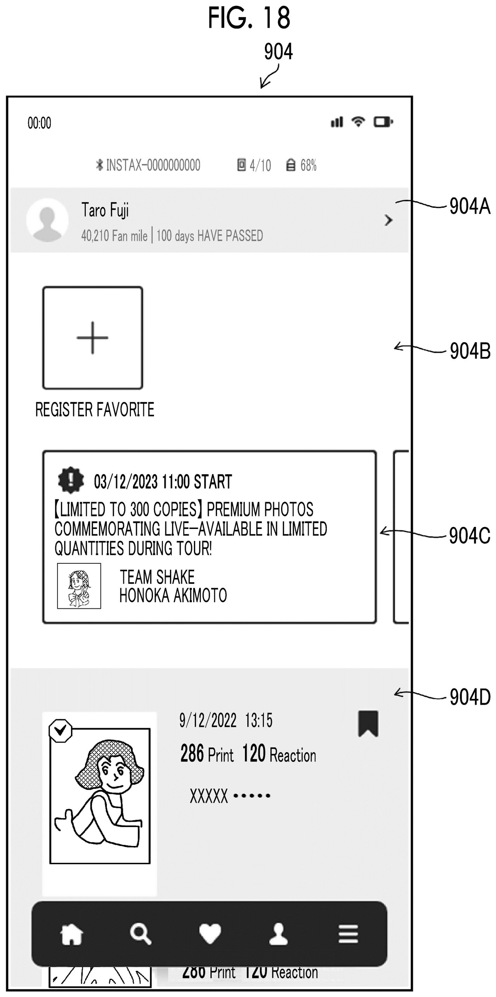

FIG. 18 is a diagram illustrating still another example of the initial screen of the user terminal 100. In a screen 904 illustrated in FIG. 18, as in the example of FIGS. 16 and 17, a region 902A is displayed in which the full name of the user or the display name such as the nickname is displayed. In a case where the user taps a region 904B, the screen transitions to a screen for registering the celebrity to be followed. Information such as the notification of the event is displayed in a region 904C, and a list (may be plural lists) of Instax prints being distributed is displayed in the region 904D.

### [Screen for Each Celebrity]

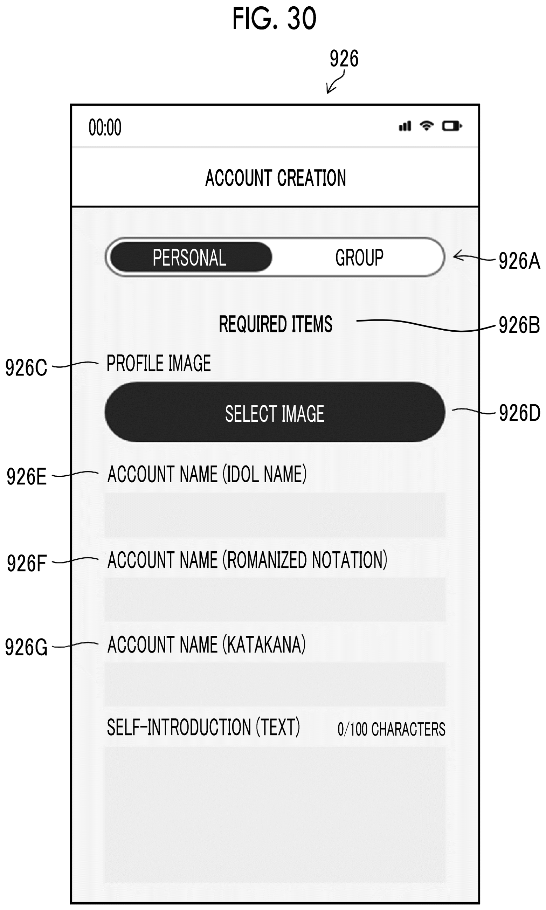

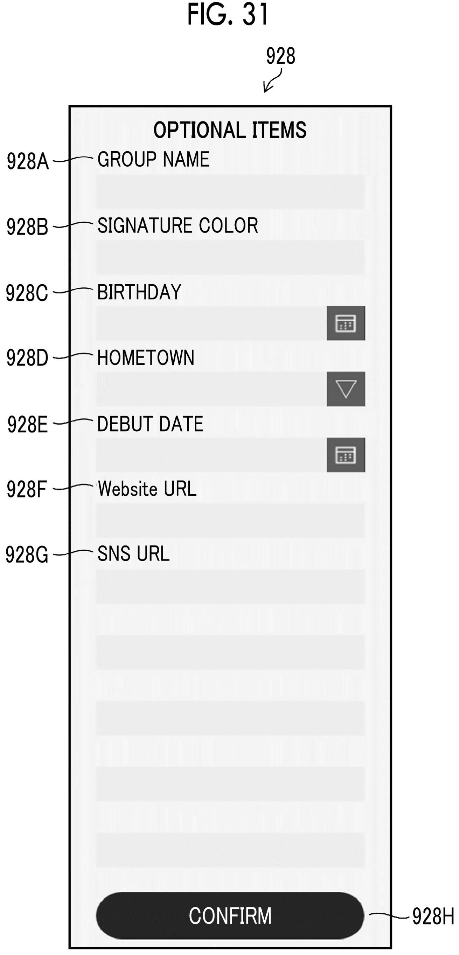

FIG. 19 is a diagram illustrating an example of a top screen for each celebrity in the user terminal 100. The top screen shows information on the celebrity. In a screen 905 illustrated in the same drawing, a full name (or designation) of the celebrity and the group name, where applicable, are displayed in the region 905A. In a case where a left- or right-pointing arrow 905B is tapped, the screen transitions to the screen showing the information on the other celebrities. The number of distributions of the photo, the number of followers, and an icon indicating whether or not the user is following is displayed in the region 905C. In addition, in a case where "+" (addition or plus sign) in a region 905D is tapped, the region 905D is expanded and a profile of the celebrity is displayed. The displayed profile is, for example, information input on a screen illustrated in FIGS. 30 and 31 described later. In a case where the region 905D is expanded, the above-described cross mark changes to a "- (subtraction or minus sign)", and in a case where the "-" is tapped, the display of the profile is closed (collapsed). A message from the celebrity is displayed in a region 905E. In addition, the photos of the celebrity may be displayed in a list below the region 905E (not illustrated in FIG. 19).

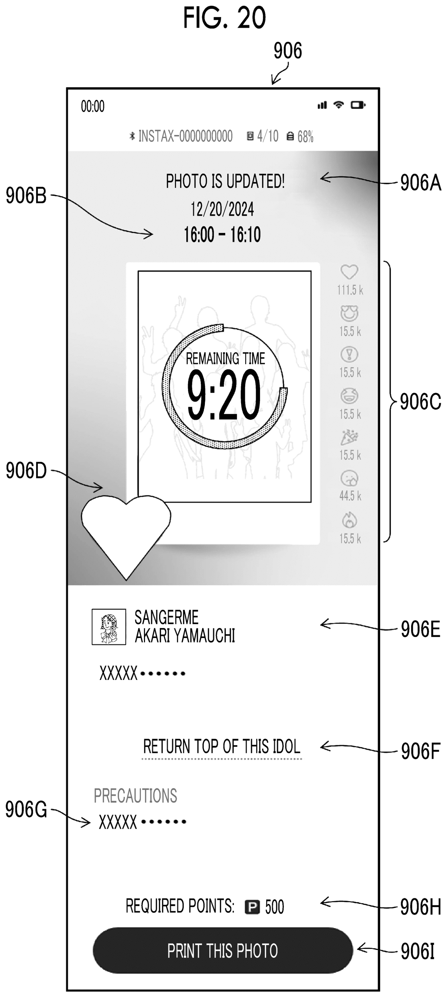

FIG. 20 illustrates a screen of an individual photo of the celebrity in the user terminal 100. The same drawing illustrates a state where the photo is uploaded and is in a state where the photo can be purchased and printed. In a screen 906 illustrated in FIG. 20, a notification that the photo is uploaded is displayed in a region 906A. A message may be changed between a normal photo and a special photo (premium photo). A distribution period of the photo (period in which the photo can be purchased and printed) is displayed in a region 906B.

A photo image is displayed in a region 906C with a frame. The photo image is in an obscured state before printing, and is clearly displayed after printing. In the present embodiment, a period during which the photo can be purchased and printed may be limited, and in the example illustrated in FIG. 20, a remaining time from the start of the distribution of the photo is displayed in a countdown manner in the region 906B. In a case where the count reaches zero, the display pattern is changed, and the fact that the photo cannot be purchased and printed is displayed. In addition, in the screen 906, the background of the photo is displayed in a color or a pattern selected by the user or the celebrity. In the premium photo, the background color or pattern may be varied from those used in the normal photo to create a sense of luxury.

The number of reactions to the photo by the user who has already performed printing is displayed in the region 906C. Different icons correspond to different reactions. In a region 906D, an icon (heart mark in the example of FIG. 20) of the reaction with the largest number among the reactions by the user who has already performed printing is displayed in a large size in a case where the screen 906 is opened by the user. A region 906E is a comment area, and a full name (or designation) of a sender (celebrity or the like), the affiliation (group name or the like), the representative image, and the comment are displayed.

In a case where the user taps a label 906F, the screen returns to the top screen of the celebrity (for example, the state illustrated in FIG. 19). Precautions are displayed in a region 906G in text or the like, and the points required for the photo purchase are displayed in a region 906H. In a case where the user taps a region 906I, the screen transitions to the screen for the photo purchase and printing.

A "persistent footer area" may be provided on the screen of FIG. 20. The persistent footer area includes, for example, the region 906H and the region 906I, and is always displayed at a lower part of the screen regardless of a scroll operation or the like.

### [Limit of Service Content in Accordance with Type of User]

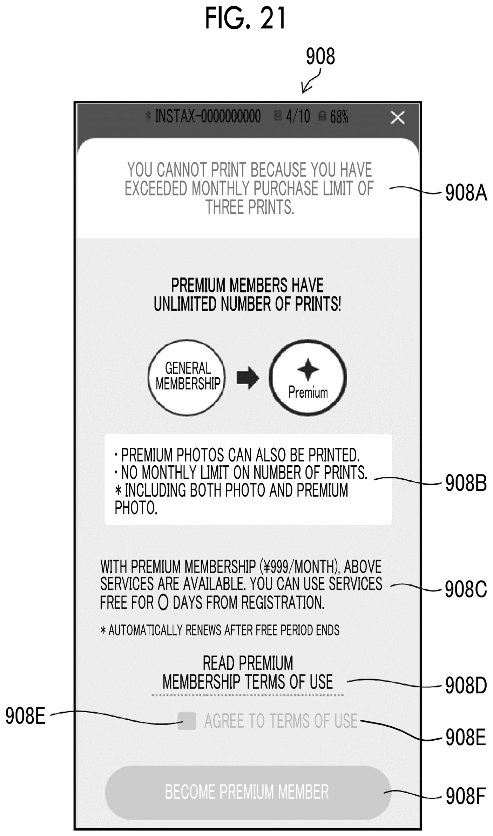

In the present embodiment, a limit may be placed on the service content (for example, the number of photos that can be printed). The limit may be changed in accordance with a type or an attribute (for example, general member and premium member or bronze member, gold member, and platinum member; an aspect of attribute information) of the user. FIG. 21 is a diagram illustrating a screen example in a case where the number of prints of the user (here, it is assumed to be a general member) in the user terminal 100 reaches a limit. In a screen 908, a message indicating that "The number of prints has reached the limit" and a message indicating that "Premium members have an unlimited number of prints" are displayed in a region 908A. In addition, a notification of the premium-membership service overview and promotional text regarding the premium membership monthly fee and free period are displayed in regions 908B and 908C. In a case where the user taps a label 908D, the terms of use of the premium membership are displayed, and a checkbox 908E is enabled (state where the checkbox 908E can be turned on/off). In a case where the user turns on the checkbox 908E, a region 908F is enabled, and the user can perform the procedure for the premium membership registration.

### [Screen during Photo Printing]

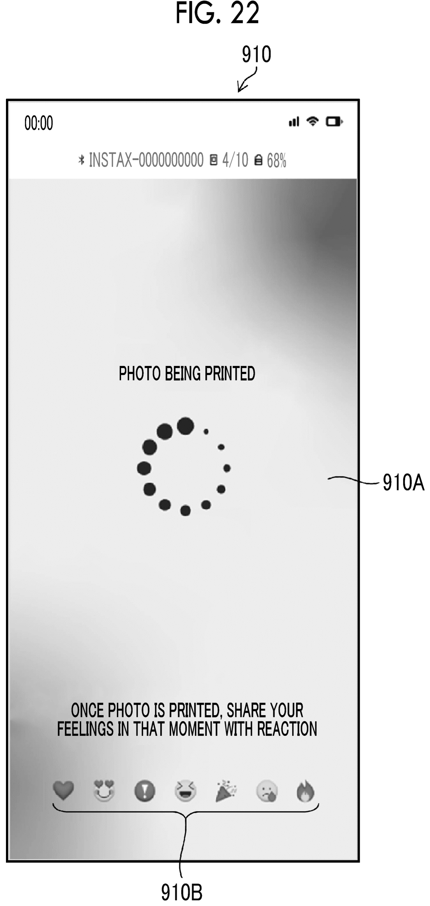

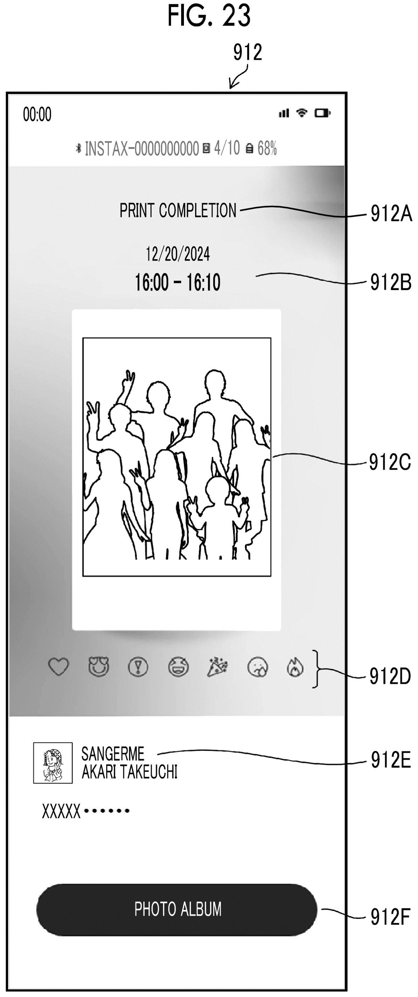

FIG. 22 is a diagram illustrating an example of a screen during photo printing in the user terminal 100. A screen 910 is displayed after the purchase check is completed and the purchase is completed. In a case where the photo is printed on the instant film, it takes time, and thus it is preferable to display "printing" on the screen. Additionally, the timing of the start and completion of printing may be determined based on information from a printer body. In addition, in the screen of FIG. 22, a background of a region 910A and a color of a reaction button 910B can inherit the color set by the celebrity in the photo (color representing the emotion of the celebrity for the photo; also referred to as "emotional color"). The reaction button 910B on the screen 910 is used as means for prompting the user to tap on a next print completion screen, not for receiving the tapping on the screen 910. In a case where printing of the photo is completed, the screen of the user terminal 100 transitions to the print completion screen illustrated in FIG. 23.

### [Print Completion Screen]

FIG. 23 is a diagram illustrating an example of the print completion screen (screen displayed in a state where printing of the photo by the printer body is completed) in the user terminal 100. In a screen 912, a message indicating the print completion is displayed in the region 912A. The number of miles or points acquired by the user may be displayed together. A distribution date and time of the photo is displayed in a region 912B, and the printed photo is displayed with a frame in a region 912C. As in the examples of FIGS. 20 and 23, the photo before printing is not clearly displayed, and is clearly displayed for the first time after printing, so that the user can be motivated to purchase and print the photo. In addition, in a case where printing is performed, the result is reflected in an aggregation result of the number of prints illustrated in FIG. 18.

In addition, a reaction button 912D is displayed on the screen 912. As described above, in a case where printing of the photo is completed, the reaction button 912D can be tapped, and the user can express his/her feelings by the tapping. The result of the tapping is reflected in an aggregation result of the reaction illustrated in FIG. 18 or FIG. 20.

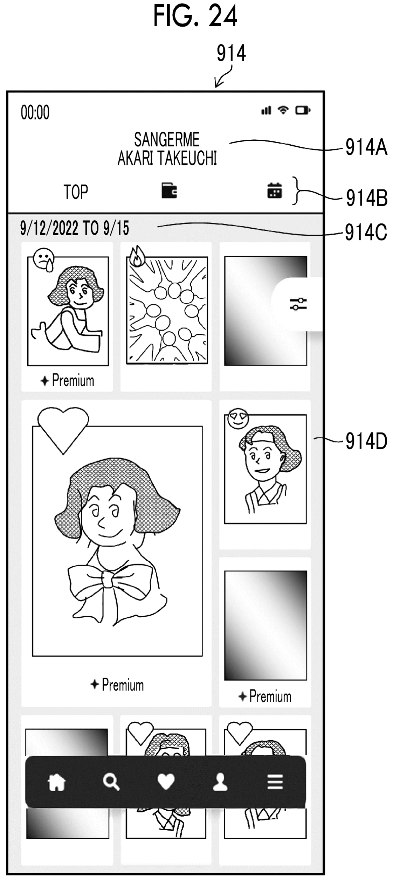

A region 912E of FIG. 23 is a comment region, and the full name or the designation of the sender (celebrity or the like), the affiliation, the representative image, and the comment are displayed. In a case where the user taps a region 912F, the screen of the user terminal 100 transitions to a photo album (list of photos for which printing is recommended by the celebrity followed by the user; see FIG. 24).

### [Photo Album]

FIG. 24 is a diagram illustrating a screen display example of the photo album in the user terminal 100. In a screen 914, the full name or the designation of the sender (celebrity), and the affiliation are displayed in a region 914A at the top. A region 914B is a fixed region, and icons indicating selectable menus are displayed. A region 914C is a region for displaying a date of the photo displayed on the screen, and is displayed in a fixed area by scrolling the screen (displayed in the same region of the screen). The date in the region 914C is changed in conjunction with the displayed photo.

The photos are displayed in a list in a region 914D. It is preferable to change a display form between the photo that is purchased and printed and the photo that is not purchased. For example, as described above, blurring may be turned on and off before and after purchase and printing, and a "not purchased" indication may be added or removed. In addition, in the region 914D, a premium photo is added with the display of "Premium". In addition, in the region 914D, the reaction with the largest number among the reactions of all users is displayed for each photo.

### [Example of Display Order of Photos Displayed in List]

An example of a display order of the photos displayed in a list will be described. The display is, by default, in reverse chronological order, and may be configured to display only the photos that have already been distributed (photos currently being distributed are not displayed). In addition, as illustrated in the example of FIG. 24, the photos are displayed in sets of three, in the order of "no enlargement", "enlarged and left-aligned", "no enlargement", and "enlarged and right-aligned". Only the purchased photo is to be enlarged, and the enlargement is not performed in a case where the purchased Instax print is not included in the three photos. In addition, in a case where there are two or more purchased photos, the newest photo is enlarged. In a case where the number of photos in the bottom row is less than three (only one or two), the photos in the row are not enlarged.

### [Details Screen of Each Photo]

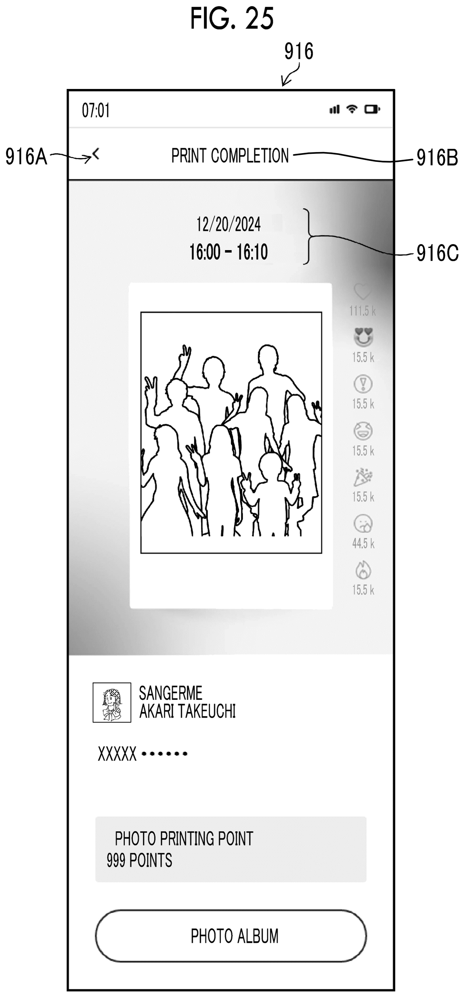

FIG. 25 is a diagram illustrating an example of a details screen of each photo. The screen transitions from a photo list screen or a calendar display screen to a screen 916. In a case where a button 916A is tapped on the screen 916, the screen returns to the original screen. A region 916B indicates a title of the screen 916. A region 916C shows the details of the photo, and the background color (displayed in the selected color), the distribution date and time, the image included in the photo (with a frame), and the reaction icon are displayed in common to the user side (fan side) and the celebrity side. The image displayed in the region 916C is a clear image in a case of having been purchased, and is an image with a blur that is not clearly visible in a case of having not been purchased. The full name (or designation) of the celebrity, the affiliation, the representative image, and the comment are displayed below the region 916C, and the points acquired by the user by printing the photo are displayed below the full name (or designation) of the celebrity, the affiliation, the representative image, and the comment (the illustrated numerical value is merely an example; the same applies hereinafter).

As described above, the screen 916 can be reached from a plurality of screens, but the screen can return to the original screen by tapping a button 916D.

### [Search for Celebrity to Be Followed]

FIG. 26 is a diagram illustrating an example of a screen (screen displayed on the user terminal 100) for the user to search for the celebrity ("favorite") to be followed. A search box 918A is displayed at the top of a screen 918, and the user can search for the celebrity by the full name or the group name. The full name or the designation of the celebrity recommended (celebrity recommended by a service provider) for the user and the representative image are displayed below the search box 918A, and in a case where these are tapped, the screen transitions to the screen of each celebrity (for example, see FIG. 19). A plurality of recommended celebrities can be displayed, and can be sorted, for example, by follower count, by Japanese syllabary order, by alphabetical order, or by latest photo posts. The user may be able to select the display conditions.

### [Personal Page of User]

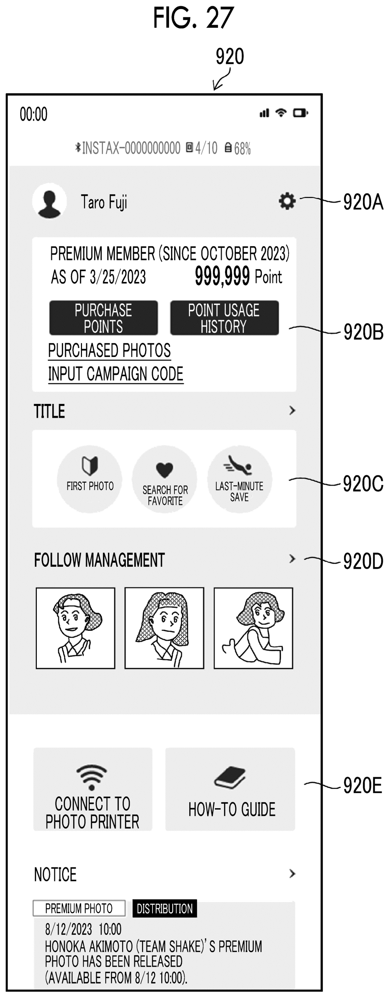

FIG. 27 is a diagram illustrating an example of a personal page (also referred to as a "my page") of the user. In a screen 920 illustrated in the same drawing, a user name is displayed in a region 920A, and in a case where the user taps this portion, the screen transitions to an account edit screen. A region 920B is a region in which the user type (general member/premium member), the points held by the user, and a label for a link to the points purchase or the points utilization record are displayed. A region 920C displays a title acquired by the user. The "title" is awarded in accordance with the user's service usage and is awarded, for example, in a case where the user first purchases and prints the photo, in a case where the user registers the celebrity to follow, or in a case where the user purchases and prints the photo just before the end of the distribution period. In the example of FIG. 27, the latest three titles are displayed. In a case where the title is not awarded, a message such as "No acquired title" or "Purchase/print the photo to acquire the title!" can be displayed.

A region 920D is a region for displaying a following status of the celebrity, and in a case where the link is tapped, the screen transitions to the screen for each celebrity (for example, see FIG. 19). A region 920E is a region for displaying a link to other functions, and in the example of FIG. 27, links to the connection (for example, short-range wireless communication) between the user terminal 100 and the printer 400 (printer) and a guide on the use are displayed. A list of notices from the system and a link to the notice are displayed below the region 920E.

### [Management of Celebrity to Be Followed]

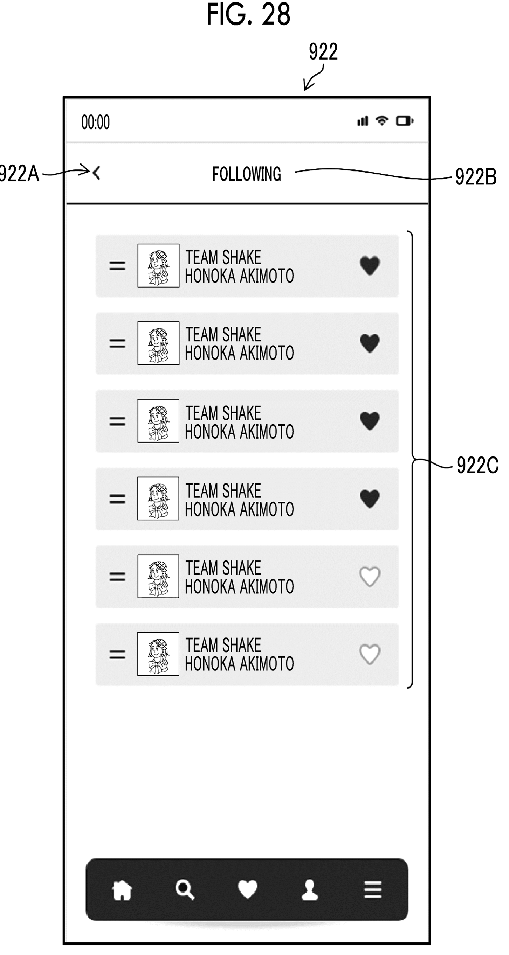

FIG. 28 is a diagram illustrating an example of a management screen (can be reached from the above-described personal page) for a case where a plurality of celebrities (also referred to as "favorite"; a specific person) to be followed are set in the user terminal 100. In a screen 922 illustrated in FIG. 28, a button 922A is displayed at the top, and the screen can return to the personal page by tapping this button. A title (here, "following") of the page is displayed in a region 922B. A region 922C displays the celebrities being followed in a list, and displays thumbnail images of the celebrities, the full names and the affiliations of the celebrities, the number of posted photo, the number of users who follow the celebrity, an icon indicating whether or not the user is following, and the like. It is preferable that the screen 922 is provided with a function (for example, movement by drag and drop) for the user to change the display order of the celebrities. In addition, it is preferable that the display order changed by this function is also reflected in the list display of the celebrities on other screens.

### [Checking and Editing of Account Information]

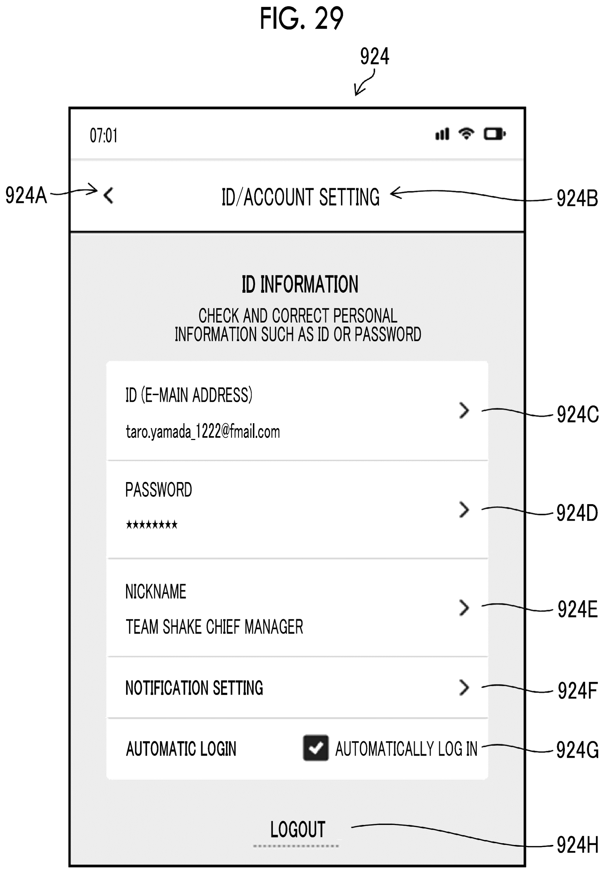

FIG. 29 is a diagram illustrating a screen example for checking and editing account information. In a screen 924 illustrated in FIG. 29, a button 924A is provided at the top, and in a case where this button is tapped, the screen returns to the personal page (see FIG. 27) of the user described above. A title (ID/account setting) of the screen is displayed in a region 924B. Below the title, information on an ID (here, an e-mail address), a password, a nickname, a notification setting, and an auto-login is displayed in regions 924C to 924G, and in a case where the button on the right side of each region is tapped, the screen transitions to a screen for editing each item. In a case where a label 924H at the bottom of the screen is tapped, the screen returns to a login screen of the system.

### [Account Creation on Celebrity Side]

FIGS. 30 and 31 are diagrams illustrating examples of an account creation screen on the celebrity side. FIG. 30 illustrates a screen 926 for inputting required items, and in a case where the selection between the individual celebrity and the group celebrity is made in a region 926A at the top, the display content of the screen changes in accordance with the selection. A label "required items" is displayed in a region 926B. Before a profile image (representative image) is selected, a button 926D of "select image" is displayed below a title "profile image" in a region 926C, and in a case where this button is tapped, the screen transitions to an image selection screen. In a case where the image selection is completed, the selected image is displayed below the title. Regions 926E, 926F, and 926G are regions for inputting an account name (idol name or the like) of the celebrity, the Romanized notation of the account name, and the account name, respectively. A region for inputting the self-introduction of the celebrity in text is provided below these regions.

FIG. 31 illustrates a screen 928 for inputting optional items. Regions 928A to 928F are regions for inputting a group name, an assigned color (color assigned to each celebrity; signature color), a birthday, a hometown, a debut date, and a uniform resource locator (URL) of a website, respectively. In addition, a region 928G is a region for inputting URLs of various social networking services (SNS), and a plurality of regions may be provided to correspond to a plurality of SNS. A button 928H for confirmation is always displayed (stays fixed while scrolling) at the bottom. In a case where all of the required items are not input or an error remains, the button 928H is disabled, and in a case where the button 928H is tapped in a state where the input is completed and the error is resolved, the screen transitions to a screen for the account creation completion.

### [Photo Posting]

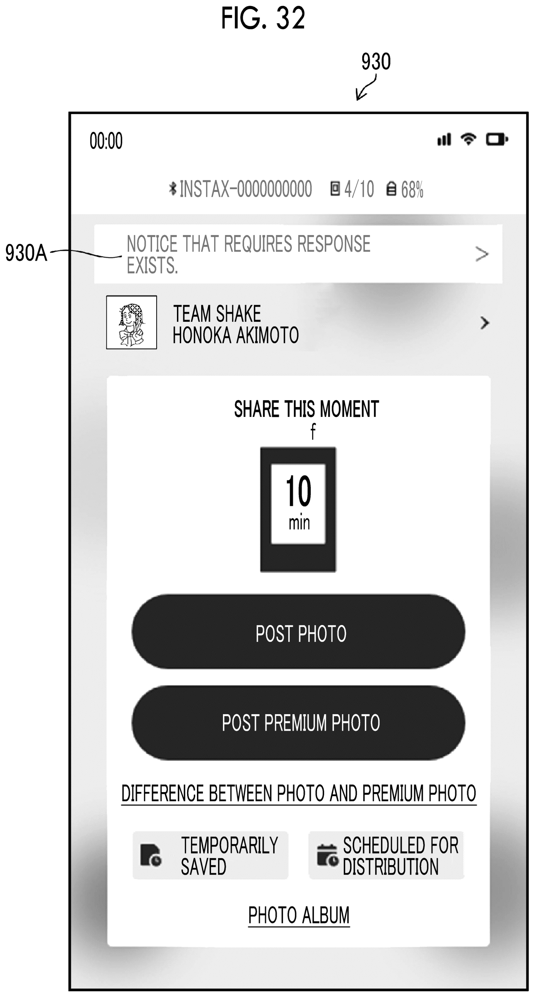

FIG. 32 is a diagram illustrating an example of a screen for posting the photo (normal photo or premium photo) by the photographer terminal. In a case where there is a "notice" from the system that requires a response on the celebrity side in a screen 930, a message is displayed in a region 930A, and in a case where the message is tapped, the screen transitions to a notice list screen. The "notice that requires a response" is, for example, "There is a problem with the image or the comment of the time-limited photo (photo that can be purchased and printed by the user only for a limited period of time) that the celebrity has tried to post, and the post has been returned to the celebrity by the manager's comment".

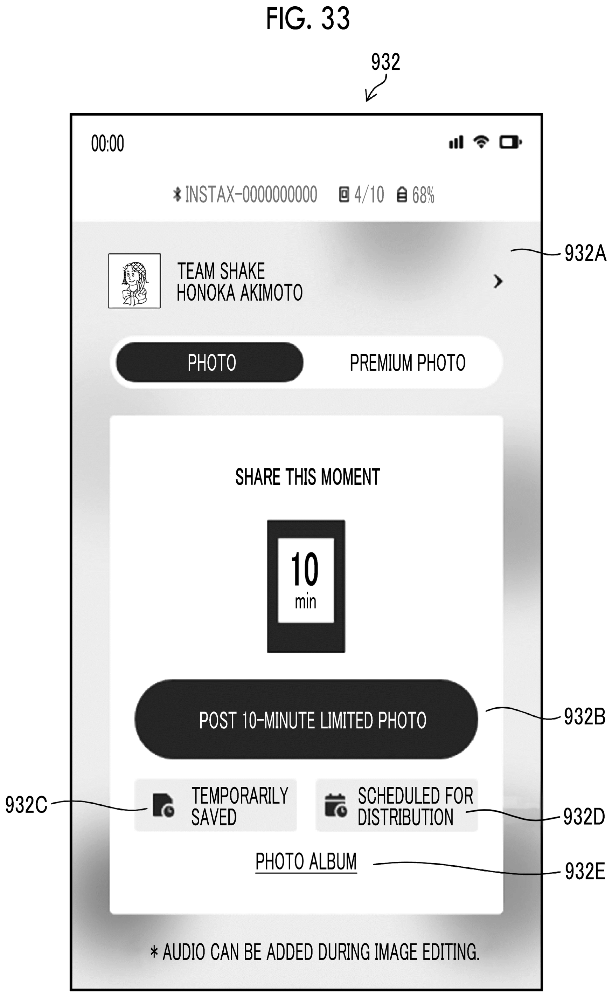

In a case where there is no "notice that requires a response", a screen as illustrated in FIG. 33 is displayed. In a screen 932, the account name of the celebrity, the group name, the representative image (profile image), and the like are displayed in a region 932A at the top, and in a case where this region is tapped, the screen transitions to the screen for checking and editing the account information (for example, see FIG. 29).

The screen 932 illustrated in FIG. 33 is a screen in a case of posting the time-limited photo described above, and in a case where a button 932B is tapped, the screen transitions to a screen for posting 10-minute limited photo (photo that can be purchased and printed only for 10 minutes). Buttons 932C and 932D are buttons for transitioning to a screen for a list of photos temporarily saved and a screen for a list of photos scheduled to be distributed, and a label 932E is a label for transitioning to the photo album. Such a time-limited photo increases the scarcity of the photos and allows fans to feel as though the fans are connected with the celebrity the fans support at that very moment.

### [Photo Distribution Setting]

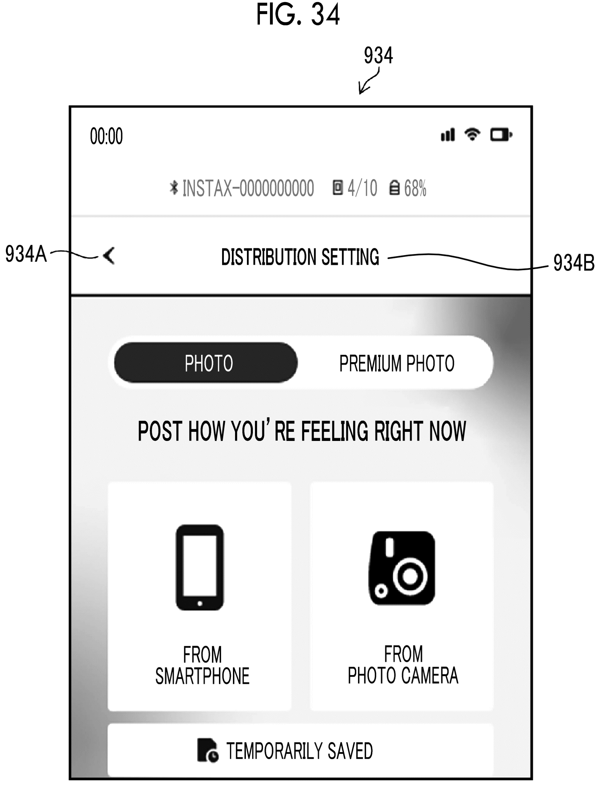

FIG. 34 is a diagram illustrating a screen example for photo distribution setting. A button 934A for returning to the personal page of the celebrity is displayed at the top of a screen 934, and a title ("distribution setting") is displayed in a region 934B. In the example illustrated in FIG. 34, the celebrity side (including the celebrity himself/herself and the manager or a staff member having an account) can post the photo from a smartphone or a photo camera (for example, a digital camera with an instant printer that can be connected to a network). In the present system, a photo with audio can also be posted by the setting on the celebrity side.

### [Detailed Setting of Photo Distribution]

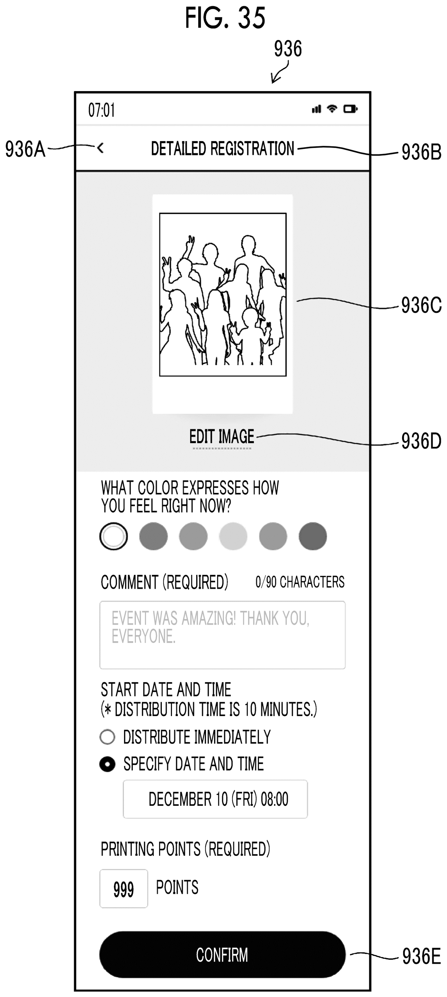

FIG. 35 is a diagram illustrating a screen example (screen example of photographer terminal) for detailed setting of photo distribution. In FIG. 35, a case where the time-limited photo is distributed will be described. In a screen 936 illustrated in the same drawing, a button 936A for returning to a previous screen (for example, the screen of FIG. 34) is displayed at the top, and a title ("detailed registration") of the screen is displayed in a region 936B. The photo image (state where the photo is printed on the instant film) to be posted is displayed in a region 936C with a frame, and in a case where a label 936D below this region is tapped, the screen transitions to an edit screen, and the photo image can be edited (enlarged, reduced, rotated, moved, trimmed, and the like). A button 936E is displayed at the bottom of the screen, and in a case where this button is tapped, the screen transitions to the check screen. It is preferable that the button 936E is disabled in a case where all of the required items are not input.

In addition, in the present embodiment, the content that can be set in detail may be changed between the normal photo and the premium photo. For example, in a case of the premium photo, as illustrated in FIG. 35, the signature color and the comment may be added to the image.

### [Display of List of Photos Pending Approval]

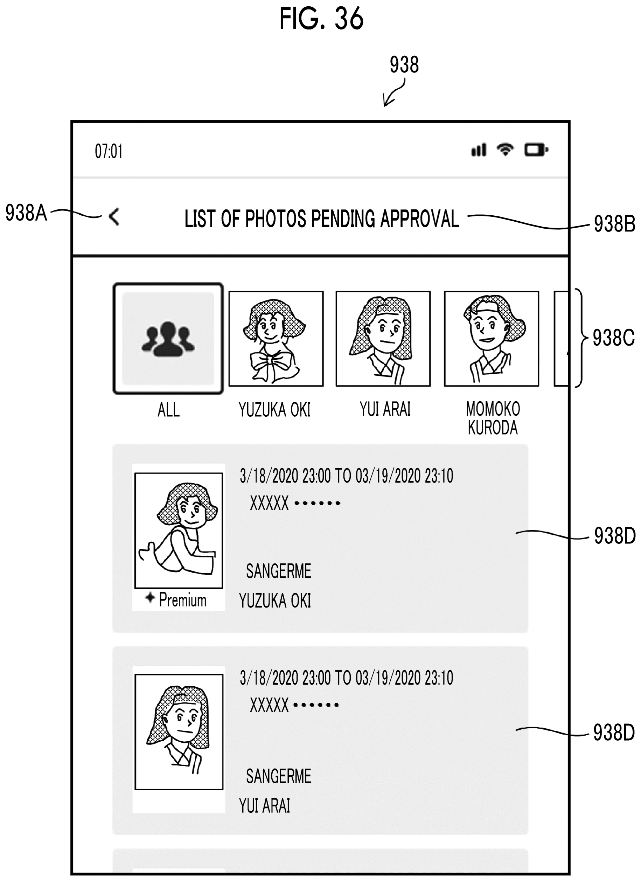

In the image distribution system 10, the photo posted by the celebrity may be uploaded and published after being approved by a person having approval authority, such as the manager. FIG. 36 is a diagram illustrating a screen example of list display of photos pending approval. In a screen 938 illustrated in the same drawing, a button 938A for returning to the previous page (for example, the personal page of the manager) is provided at the top of the screen, and a title ("list of photos pending approval") of the page is displayed in a region 938B. A region 938C is a region for switching the list display target, and, in an initial state, "all" is selected, and the photos pending approval of all celebrities handled by the manager or the like are displayed in a region 938D at the bottom of the screen. In a case where the image of each celebrity is tapped in the region 938C, only the photo pending approval by the celebrity is displayed in the region 938D. The region 938D is a region in which the photo pending approval is displayed, and for example, the image used in the photo, the distribution time, the full name or the designation of the celebrity, the group name, and the comment or the message by the celebrity are displayed in order of proximity to the scheduled publication time. In a case of the premium photo, display indicating the fact (in the example of FIG. 36, addition of an icon displayed as "Premium") is performed.

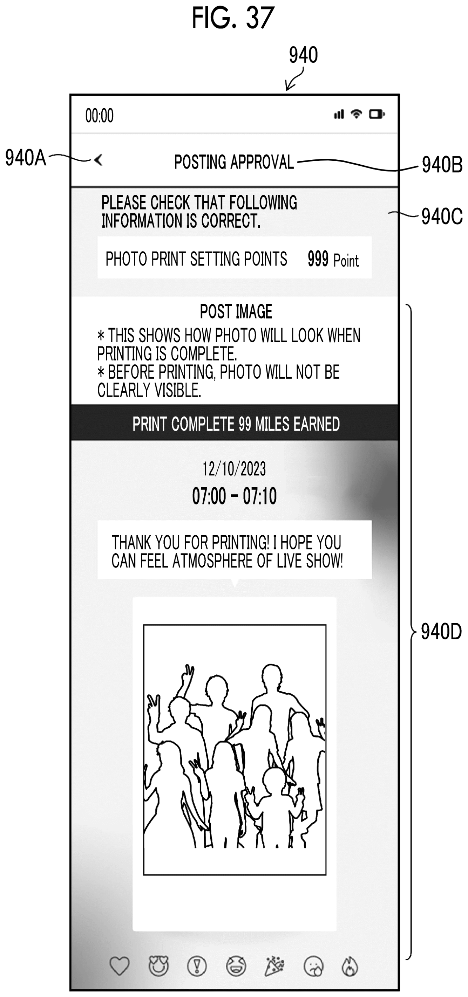

In a case where a region of any photo is tapped in a state where the photos are displayed in a list, the screen transitions to a post content approval screen (for example, see FIG. 37).

### [Approval of Post Content]

FIG. 37 is a diagram illustrating an example of the post content approval screen. In a screen 940 illustrated in the same drawing, a button 940A for returning to the previous screen (the list display screen of the photos pending approval or the screen of the notice of the request for photo approval) is displayed at the top, and a title ("posting approval") of the screen is displayed in a region 940B. The following regions are regions for checking the post content. The number of points required for printing the photo is displayed in a region 940C, and the post image is displayed in a region 940D. The post image is the image (with a frame) used in the photo, the signature color, the comment, the distribution date and time, the points acquired by the user in a case where the photo is printed, or the like, but other information may be displayed.

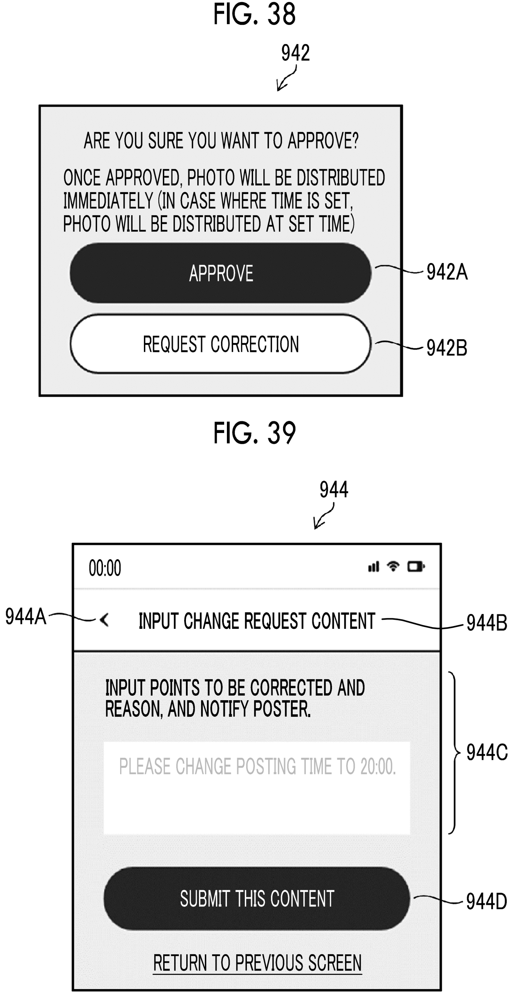

FIG. 38 is a diagram illustrating a screen example for the person having approval authority to make the approval or a correction request. A screen 942 may be displayed below the screen 940 described above. In a case where a button 942A is tapped, the photo is distributed (added to the list of photos scheduled to be distributed depending on the distribution time), and in a case where a button 942B is tapped, the screen transitions to a correction request screen (for example, see FIG. 39).

### [Correction Request for Post Content]

FIG. 39 is a diagram illustrating a screen example for the person having approval authority to make the correction request for the post content. In a screen 944 illustrated in the same drawing, a button 944A for returning to the previous screen (for example, the post content check screen of FIG. 37 or the like) is displayed at the top, and a title ("correction request content input") of the screen is displayed in a region 944B. A region 944C is a region for inputting the correction request for the celebrity (in the example of FIG. 39, "Please correct the posting time to 20:00"). In a case where the button 944D is tapped, the correction request is transmitted to the celebrity.

### [Preview Screen of Photo]

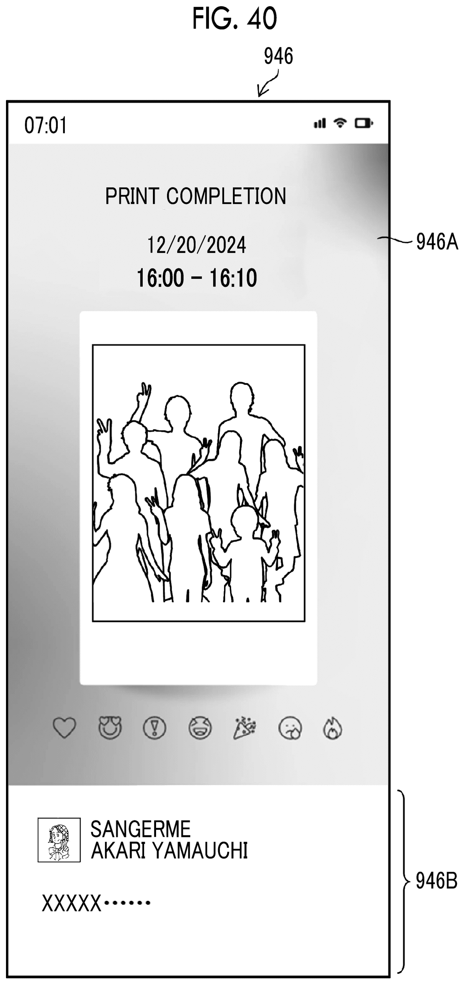

FIG. 40 is a diagram illustrating an example of a preview screen of the photo. In a screen 946 illustrated in the same drawing, the print completion screen displayed on the user terminal 100 is displayed in a region 946A. The displayed content is, for example, the background color (displayed in a color selected by the celebrity or the like), the distribution date and time, the image used in the photo (with a frame), the reaction button (displayed but not operated), the full name or the designation of the poster, the group name, the representative image, and the comment, but the display may be different from this.

### <Supplementary Note>

It should be noted that the foregoing disclosure also includes the inventions set forth below.

### (Aspect 1)

A server apparatus comprising: a first processor; and a memory that stores a first image that is an image for printing, in which the server apparatus communicates with a user terminal and distributes the first image, and the first processor is configured to: transmit a second image that is an incomplete display form of the first image to the user terminal; receive a distribution request for the first image associated with the second image from the user terminal; and distribute the first image to the user terminal as the image for printing in a case where the distribution request is received.

### (Aspect 2)

The server apparatus according to aspect 1, in which a region of a portion of the first image is hidden in the second image.

### (Aspect 3)

The server apparatus according to aspect 1 or 2, in which a portion of the first image is displayed in a blurred manner in the second image.

### (Aspect 4)

The server apparatus according to aspect 1, in which an entire first image is displayed in a blurred manner in the second image.

### (Aspect 5)

The server apparatus according to any one of aspects 1 to 4, in which the first processor is configured to transmit information on content of the incomplete display form to the user terminal.

### (Aspect 6)

The server apparatus according to aspect 5, in which the first processor is configured to transmit information on a hidden image as the information to the user terminal.

### (Aspect 7)

The server apparatus according to aspect 5, in which the first processor is configured to transmit information on blurred display as the information to the user terminal.

### (Aspect 8)

The server apparatus according to any one of aspects 1 to 7, in which the second image includes notification display indicating a region of the incomplete display form.

### (Aspect 9)

The server apparatus according to any one of aspects 1 to 8, in which the first image is a composite image of a main subject and text, and the first processor is configured to analyze a position of the main subject and determine a position of the text.

### (Aspect 10)

The server apparatus according to aspect 9, in which the first processor is configured to: receive information on preferences of a user from the user terminal; and determine a position for disposing the text based on the information on the preferences.

### (Aspect 11)

The server apparatus according to any one of aspects 1 to 10, in which the first image is a composite image of a captured image and text, and the text indicates a message exchange between a user of the user terminal and a subject of the captured image.

### (Aspect 12)

A print distribution system consisting of: a server apparatus including a first processor and a memory that stores a first image that is an image for printing; and a user terminal including a second processor and a display unit and connected to a printer or provided with a printer, in which the first processor is configured to: transmit a second image that is an incomplete display form of the first image to the user terminal; receive a distribution request for the first image associated with the second image from the user terminal; and distribute the first image to the user terminal as the image for printing in a case where the distribution request is received, and the second processor is configured to: display the second image on the display unit; and receive the distributed first image and print the first image by the printer.

### (Aspect 13)

The print distribution system according to aspect 12, in which the second processor is configured to display the distributed first image on the display unit.

### (Aspect 14)

A print distribution method using a server apparatus including a first processor and a memory that stores a first image that is an image for printing, the server apparatus communicating with a user terminal and distributing the first image, the print distribution method being executed by the first processor, the print distribution method comprising: a step of transmitting a second image that is an incomplete display form of the first image to the user terminal; a step of receiving a distribution request for the first image associated with the second image from the user terminal; and a step of distributing the first image to the user terminal as the image for printing in a case where the distribution request is received.

### (Aspect 15)

A program for causing a server apparatus including a first processor and a memory that stores a first image that is an image for printing, the server apparatus communicating with a user terminal and distributing the first image, to execute a print distribution method, the program causing the first processor to execute: a step of transmitting a second image that is an incomplete display form of the first image to the user terminal; a step of receiving a distribution request for the first image associated with the second image from the user terminal; and a step of distributing the first image to the user terminal as the image for printing in a case where the distribution request is received.

Although the examples of the present invention have been described above, it goes without saying that the present invention is not limited to the above-described embodiments, and various modifications can be made without departing from the gist of the present invention.

### Explanation of References

1: print distribution system
10: print distribution server apparatus
12: processor
12A: sample image transmission unit
12B: distribution request reception unit
12C: main image distribution unit
12D: related information transmission unit
14: memory
40: network
100: user terminal
104: display unit
106: operation unit
112: processor
112A: display control unit
112B: printing control unit
114: communication interface
116: memory
118: camera
200: printer

## Claims

1. A server apparatus comprising:
a first processor; and
a memory that stores a first image that is an image for printing,
wherein the server apparatus communicates with a user terminal and distributes the first image, and
the first processor is configured to:
transmit a second image that is an incomplete display form of the first image to the user terminal;
receive a distribution request for the first image associated with the second image from the user terminal; and
distribute the first image to the user terminal as the image for printing in a case where the distribution request is received.

2. The server apparatus according to claim 1,
wherein a region of a portion of the first image is hidden in the second image.

3. The server apparatus according to claim 1,
wherein a portion of the first image is displayed in a blurred manner in the second image.

4. The server apparatus according to claim 1,
wherein an entire first image is displayed in a blurred manner in the second image.

5. The server apparatus according to claim 1,
wherein the first processor is configured to transmit information on content of the incomplete display form to the user terminal.

6. The server apparatus according to claim 5,
wherein the first processor is configured to transmit information on a hidden image as the information to the user terminal.

7. The server apparatus according to claim 5,
wherein the first processor is configured to transmit information on blurred display as the information to the user terminal.

8. The server apparatus according to claim 1,
wherein the second image includes notification display indicating a region of the incomplete display form.

9. The server apparatus according to claim 1,
wherein the first image is a composite image of a main subject and text, and
the first processor is configured to analyze a position of the main subject and determine a position of the text.

10. The server apparatus according to claim 9,
wherein the first processor is configured to:
receive information on preferences of a user from the user terminal; and
determine a position for disposing the text based on the information on the preferences.

11. The server apparatus according to claim 1,
wherein the first image is a composite image of a captured image and text, and
the text indicates a message exchange between a user of the user terminal and a subject of the captured image.

12. A print distribution system consisting of:
a server apparatus including a first processor and a memory that stores a first image that is an image for printing; and
a user terminal including a second processor and a display unit and connected to a printer or provided with a printer,
wherein the first processor is configured to:
transmit a second image that is an incomplete display form of the first image to the user terminal;
receive a distribution request for the first image associated with the second image from the user terminal; and
distribute the first image to the user terminal as the image for printing in a case where the distribution request is received, and
the second processor is configured to:
display the second image on the display unit; and
receive the distributed first image and print the first image by the printer.

13. The print distribution system according to claim 12,
wherein the second processor is configured to display the distributed first image on the display unit.

14. A print distribution method using a server apparatus including a first processor and a memory that stores a first image that is an image for printing, the server apparatus communicating with a user terminal and distributing the first image, the print distribution method being executed by the first processor, the print distribution method comprising:
a step of transmitting a second image that is an incomplete display form of the first image to the user terminal;
a step of receiving a distribution request for the first image associated with the second image from the user terminal; and
a step of distributing the first image to the user terminal as the image for printing in a case where the distribution request is received.

15. A program for causing a server apparatus including a first processor and a memory that stores a first image that is an image for printing, the server apparatus communicating with a user terminal and distributing the first image, to execute a print distribution method, the program causing the first processor to execute:
a step of transmitting a second image that is an incomplete display form of the first image to the user terminal;
a step of receiving a distribution request for the first image associated with the second image from the user terminal; and
a step of distributing the first image to the user terminal as the image for printing in a case where the distribution request is received.

16. A non-transitory computer-readable recording medium on which the program according to claim 15 is recorded.
